# EUROPEAN PATENT SPECIFICATION

(11) **EP 2 844 716 B1**
(45) Date of publication and mention of the grant of the patent: **13.02.2019**
(21) Application number: 13731559.4
(22) Date of filing: 06.06.2013
(51) Int. Cl.: C09K 8/36, C09K 8/32

(54) **BIODEGRADABLE ORGANOPHILIC CLAYS FOR DRILLING FLUIDS**
BIOLOGISCH ABBAUBARE ORGANOPHILE TONERDEN FÜR BOHRFLÜSSIGKEITEN
ARGILES ORGANOPHILES BIODÉGRADABLES POUR FLUIDES DE FORAGE

(30) Priority: 06.07.2012 US 201213543213
(43) Date of publication of application: 11.03.2015
(73) Proprietor: Halliburton Energy Services, Inc., Houston, TX 77072 (US)
(72) Inventor: FRANTZ, Eric, Benjamin, Houston, TX 77008 (US)
(74) Representative: Hoffmann Eitle
(86) International application number: PCT/US2013/044425
(87) International publication number: WO 2014/007935

(56) References cited:
- EP-A1- 0 681 990
- EP-A1- 0 798 267
- EP-A1- 1 138 740
- US-A1- 2007 197 403

## Description

### BACKGROUND

The present invention relates to biodegradable organophilic clays for use in drilling fluids, the biodegradable organophilic clays treated with a surfactant system that includes biodegradable quaternary ammonium surfactants and nonbiodegradable quaternary ammonium surfactants.

Organophilic clays are commonly used in conjunction with oil-based drilling fluids to increase the viscosity and enhance solids suspension, e.g., the suspension of drill cuttings. Bentonite is a commonly used example. Organophilic clays suitable for oilfield use are typically produced by treating a hydrophilic clay having anionic surface charges, *e.g.,* bentonite, with a cationic surfactant. It is believed that the cationic surfactant becomes tightly bound to the clay surface through electrostatic charges, which causes the surfactant tail groups to extend into the solvent, thereby yielding an organophilic surface.

In producing organophilic clays, quaternary ammonium compounds are the most commonly used cationic surfactants. However, many of the most commonly used quaternary ammonium compounds are not biodegradable and often require expensive and time-consuming cleanup procedures. Recently, organophilic clays based on biodegradable quaternary ammonium surfactants have been utilized to reduce the cost and time associated with clean-up procedures and reduce environmental impact, especially to the marine environment and groundwater. However, the rheological properties of the drilling fluids made with such organophilic clays treated with biodegradable quaternary ammonium surfactants do not impart the same suspension properties as compared to drilling fluids that include organophilic clays treated with nonbiodegradable quaternary ammonium surfactants. Further, biodegradable quaternary ammonium surfactants can be expensive. In some instances, as much as five times more expensive.

Accordingly, it is desirable to develop a cationic surfactant system for use in producing organophilic clays that provides both biodegradability and good performance for a drilling fluid incorporating such clays, while maintaining economic viability.

EP 1 138 740 A1 discloses an organophilic clay additive comprising the reaction product of hectorite clay, an alkoxylated quaternary ammonium salt, and an organic cation which is not an alkoxylated quaternary ammonium salt.

US 2007/197403 A1 discloses an organophilic clay additive comprising the reaction product of attapulgite clay, an alkoxylated quaternary ammonium salt, and an organic cation which is not an alkoxylated quaternary ammonium salt.

EP 0 681 990 A1 discloses an organophilic clay gellant comprising the reaction product of a smectite-type clay, a first organic cation, a second organic cation which is a polyalkoxylated quaternary ammonium salt, and one or more organic anions that is capable of reacting with said first and second organic cations to form an organic cation-organic anion complex with said smectite-type clay.

EP 0 798 267 A1 discloses an organophilic clay comprising the reaction product of a smectite-type clay and a quaternary ammonium compound.

### SUMMARY OF THE INVENTION

The present invention relates to biodegradable organophilic clays for use in drilling fluids, the biodegradable organophilic clays treated with a surfactant system that includes biodegradable quaternary ammonium surfactants and nonbiodegradable quaternary ammonium surfactants.

In one embodiment of the present invention, there is provided a drilling fluid comprising an oil-based fluid, and an organophilic clay treated with a surfactant system comprising a biodegradable quaternary ammonium surfactant and a nonbiodegradable quaternary ammonium surfactant, wherein the biodegradable quaternary ammonium surfactant is a propalkonium-based amide, and the biodegradable quaternary ammonium surfactant is capable of degrading by more than 90% over 28 days, as determined by Method 306 of the OECD Guidelines for the Testing of Chemicals, and wherein the nonbiodegradable quaternary ammonium surfactant is a dialkyl dihydrogenated tallow ammonium surfactant.

In another embodiment of the present invention, there is provided a method comprising drilling at least a portion of a wellbore penetrating a subterranean formation using a drilling fluid as defined above.

The features and advantages of the present invention will be readily apparent to those skilled in the art upon a reading of the description of the preferred embodiments that follows.

### DETAILED DESCRIPTION

The present invention relates to biodegradable organophilic clays for use in drilling fluids, the biodegradable organophilic clays treated with a surfactant system that includes biodegradable quaternary ammonium surfactants and nonbiodegradable quaternary ammonium surfactants.

The surfactant systems described herein advantageously provide for, in some embodiments, the production of organophilic clays that are both biodegradable and less costly than known organophilic clays that use only biodegradable quaternary ammonium surfactants. In some embodiments, the biodegradable organophilic clays of the present invention utilize surfactant systems that comprise biodegradable quaternary ammonium surfactants, thereby imparting desirable degradation qualities to the biodegradable organophilic clays as a whole. Further, the biodegradable organophilic clays have been shown, in some embodiments, to increase the viscosity of drilling fluids, thereby enhancing particle suspension qualities in such drilling fluids.

The surfactant systems described herein may also provide for, in some embodiments, tailoring the composition of the organophilic clays, which in turn, allows for tailoring and/or optimizing based on an operators needs for performance, price, and/or level of biodegradability.

It should be noted that when "about" is provided at the beginning of a numerical list, "about" modifies each number of the numerical list. It should be noted that in some numerical listings of ranges, some lower limits listed may be greater than some upper limits listed. One skilled in the art will recognize that the selected subset will require the selection of an upper limit in excess of the selected lower limit.

Biodegradable organophilic clays of the present invention comprise clay treated with a surfactant system comprising a biodegradable quaternary ammonium surfactant and a nonbiodegradable quaternary ammonium surfactant, wherein the biodegradable quaternary ammonium surfactant is a propalkonium-based amide and the nonbiodegradable quaternary ammonium surfactant is a dialkyl dihydrogenated tallow ammonium surfactant. As used herein, the term "nonbiodegradable quaternary ammonium surfactant" refers to a surfactant that degrades by less than about 90% over 28 days as determined by Method 306 of the OECD Guidelines for the Testing of Chemical. As used herein, the term "biodegradable quaternary ammonium surfactant" refers to a surfactant that degrades by more than about 90% over 28 days, as determined by Method 306 of the OECD Guidelines for the Testing of Chemicals, in force at the time of this disclosure.

Clays suitable for use in conjunction with the present invention may include, but are not limited to, a member of the smectite family, a member of the illite family, a member of the palygorskite-sepiolite phyllosilicate family, bentonite, hectorite, attapulgite, smectite, vermiculite, swellable fluoromica, montmorillonite, beidellite, saponite, sepiolite, and the like, any cation exchanged version thereof, and any combination thereof.

The biodegradable quaternary ammonium surfactant is a propalkonium based amide such as AMMONYX® SDBC (a stearamidopropalkonium chloride, available from Stepan Company).

The nonbiodegradable quaternary ammonium surfactant is a dialkyl dihydrogenated tallow ammonium surfactant.

In some embodiments, biodegradable organophilic clays of the present invention may comprise a weight ratio of the biodegradable quaternary ammonium surfactant to the nonbiodegradable quaternary ammonium surfactant ranging from a lower limit of about 1:10, 1:5, or 1:1 to an upper limit of about 10:1, 7:1, 5:1, or 3:1, and wherein the weight ratio may range from any lower limit to any upper limit and encompass any subset therebetween.

In some embodiments, biodegradable organophilic clays of the present invention may comprise a weight ratio of the clay to the surfactant system described herein ranging from a lower limit of about 1:1, 3:2; or 2:1 to an upper limit of about 5:1, 4:1, or 3:1, and wherein the weight ratio may range from any lower limit to any upper limit and encompass any subset therebetween.

In some embodiments, biodegradable organophilic clays of the present invention may be produced by a wet process. For example, in some embodiments, clay may be treated with a surfactant system described herein by first hydrating the clay in water. The resulting slurry may then be filtered through a sieve to remove impurities, followed by passing the slurry through an ion exchange column to remove divalent cations. The slurry may then be heated and stirred while the surfactant system described herein is added thereto. It may be heated at a temperature in the range of from about 60°C (140°F) to about 68°C (155°F) for a period of time effective to react the surfactants with the clay surface, so as to form an organophilic clay. Thereafter, the organophilic clay may be dried by filtering it and heating the resulting filter cake at a temperature in a range of from about 60°C (140°F) to about 66°C (150°F) for a period of time effective to dry the filter cake. The dried organophilic clay may then be ground to ensure that it can be easily dispersed in fluid. The ground organophilic clay may optionally be filtered through a sieve to generate consistent particle sizes.

In some embodiments, biodegradable organophilic clays of the present invention may be produced by a dry process. For example, in some embodiments, clay (e.g., 74 µm (200 mesh) clay particles) and molten surfactant system described herein may be added to an extruder, comingled, and compressed at high pressure against a perforated die plate. Without being limited by theory, it is believed that the high pressure and shear at the die plate drives a low solvent melt reaction enabling binding of cationic quaternary ammonium surfactants of the molten surfactant system to the anionic surface of the clay, thereby producing organophilic clay. The dried organophilic clay may then be ground to ensure that it can be easily dispersed in fluid. The ground organophilic clay may optionally be filtered through a sieve to generate consistent particle sizes.

In some embodiments, biodegradable organophilic clays may comprise organic content that comprises a surfactant system as described herein, the organic content having a biodegradability in seawater as determined by Method 306 of the OECD Guidelines for the Testing of Chemical ranging from a lower limit of about 10%, 20%, or 25% to an upper limit of about 40%, 35%, 30%, or 25%, and wherein the biodegradability in seawater may range from a lower limit to any upper limit and encompass any subset therebetween. As used herein, the term "organic content" relative to an organophilic clay refers to the organic materials of the organophilic clay and encompass, *inter alia,* surfactant systems described herein, polymers, other surfactants, carbon containing molecules, and the like.

The drilling fluid comprises an oil-based fluid and an organophilic clay treated with a surfactant system of the present invention.

Suitable oil-based fluids for use in the present invention may be any oleaginous continuous phase fluid suitable for use in subterranean operations. By way of nonlimiting example, suitable oil-based fluids may include alkanes, olefins, aromatic organic compounds, cyclic alkanes, paraffins, diesel fluids, mineral oils, desulfurized hydrogenated kerosenes, and the like, and any combination thereof.

In some embodiments, a drilling fluid of the present invention may include an invert emulsion with an oil-based continuous phase and an aqueous discontinuous phase. Suitable invert emulsions may have an oil-to-water ratio from a lower limit of greater than about 50:50, 55:45, 60:40, 65:35, 70:30, 75:25, or 80:20 to an upper limit of less than about 100:0, 95:5, 90:10, 85:15, 80:20, 75:25, 70:30, or 65:35 by volume in the base treatment fluid, and wherein the ratio may range from any lower limit to any upper limit and encompass any subset therebetween.

In some embodiments, organophilic clays described herein may be present in a drilling fluid of the present invention in an amount ranging from a lower limit of about 1 kg/m³ (0.5 pounds per barrel) ("lb/bbl"), 3 kg/m³ (1 Ib/bbl), 6 kg/m³ (2 lb/bbl), or 14 kg/m³ (5 lb/bbl), to an upper limit of about 43 kg/m³ (15 lb/bbl), 34 kg/m³ (12 lb/bbl), 29 kg/m³ (10 lb/bbl), or 14 kg/m³ (5 lb/bbl), and wherein the amount may range from any lower limit to any upper limit and encompass any subset therebetween.

In some embodiments, a drilling fluid may further comprise suitable additives. Suitable additives may include, but are not limited to, salts, alkali metal salts, weighting agents, inert solids, fluid loss control agents, high and low shear suspension agents, filtration aids, emulsifiers, dispersion aids, corrosion inhibitors, lubricants, emulsion thinners, emulsion thickeners, deflocculants, viscosifying agents, gelling agents, surfactants, particulates, lost circulation materials, bridging agents, pH control additives, breakers, biocides, stabilizers, scale inhibitors, gas hydrate inhibitors, mutual solvents, oxidizers, reducers, friction reducers, clay stabilizing agents, and the like, and any combination thereof. In some embodiments, preferred additives may include, but are not limited to, primary emulsifiers, secondary emulsifiers, clay stabilizers, alkali metal salts, high and low shear suspension agents, filtration aids, weighting agents, deflocculants, lost circulation materials, lubricants, and any combination thereof.

The drilling fluids described herein may, in some embodiments, be prepared by combining organophilic clays of the present invention with the other components, *e.g.,* oil-based fluids and optionally additives. In some embodiments, the drilling fluids may be prepared at an off-site location away from the wellbore drilling site. In some embodiments, drilling fluids may be prepared on-the-fly at the wellbore drilling site.

Some embodiments may involve drilling at least a portion of a wellbore penetrating a subterranean formation using a drilling fluid that comprises an oil-based fluid and organophilic clays of the present invention. In some embodiments, the drilling fluid may serve as a drill-in fluid designed for wellbore drilling through production zones in a subterranean formation.

The exemplary biodegradable organophilic clays disclosed herein may directly or indirectly affect one or more components or pieces of equipment associated with the preparation, delivery, recapture, recycling, reuse, and/or disposal of the disclosed biodegradable organophilic clays. For example, the disclosed biodegradable organophilic clays may directly or indirectly affect one or more mixers, related mixing equipment, mud pits, storage facilities or units, fluid separators, heat exchangers, sensors, gauges, pumps, compressors, and the like, used generate, store, monitor, regulate, and/or recondition the exemplary biodegradable organophilic clays. The disclosed biodegradable organophilic clays may also directly or indirectly affect any transport or delivery equipment used to convey the biodegradable organophilic clays to a well site or downhole such as, for example, any transport vessels, conduits, pipelines, trucks, tubulars, and/or pipes used to fluidically move the biodegradable organophilic clays from one location to another, any pumps, compressors, or motors (*e.g.,* topside or downhole) used to drive the biodegradable organophilic clays into motion, any valves or related joints used to regulate the pressure or flow rate of the biodegradable organophilic clays, and any sensors (*i.e.,* pressure and temperature), gauges, and/or combinations thereof, and the like. The disclosed biodegradable organophilic clays may also directly or indirectly affect the various downhole equipment and tools that may come into contact with the chemicals/fluids such as, but not limited to, drill string, coiled tubing, drill pipe, drill collars, mud motors, downhole motors and/or pumps, floats, MWD/LWD tools and related telemetry equipment, drill bits (including roller cone, PDC, natural diamond, hole openers, reamers, and coring bits), sensors or distributed sensors, downhole heat exchangers, valves and corresponding actuation devices, tool seals, packers and other wellbore isolation devices or components, and the like.

To facilitate a better understanding of the present invention, the following examples of preferred or representative embodiments are given. In no way should the following examples be read to limit, or to define, the scope of the invention.

### EXAMPLES

Two organophilic clay samples were prepared by a dry method where surfactant systems of the present invention were melted and mixing 164 g of NATIONAL® PREMIUM 200 WT (bentonite, available from Halliburton Energy Services, Inc.). The two surfactant systems used were (Sample 1) 29 g VARIQUAT B 343 A (a dimethyl dihydrogenated tallow ammonium chloride surfactant, available from Evonik Industries) and 127 g AGENT 4356-44 (a quaternary ammonium surfactant with a tail group having a carbonyl linkage, available from Stepan Company) and (Sample 2) 38 g VARIQUAT B 343 A and 109 g AGENT 4356-44. The mixture was extruded at 150°C using a laboratory scale extruder. The material was then dried overnight at 105°C. After cooling for several hours, the dried material was passed through a Raymond laboratory scale hammer mill four times to yield approximately 75% of the material having sub 74 µm size (sub-200 mesh size).

Four drilling fluid samples were prepared according to the compositions provided in Table 1 using Sample 1 and Sample 2 from above, Sample 3 (an organophilic clay treated with only a biodegradable quaternary ammonium surfactant), and GELTONE® II (an organophilic clay treated with a nonbiodegradable quaternary ammonium surfactant, available from Halliburton Energy Services, Inc.).

**Table 1**

| | Sample 1 | Sample 2 | Sample 3 | GELTONE® II |
|---|---|---|---|---|
| organophilic clay kg (lb) | 4 (9.0) | 4 (9.0) | 4 (9.0) | 2.7 (6.0) |
| CLAIRSOL® NS* m³ (bbl) | --- | --- | --- | 0.09 (0.542) |
| EDC® 95-11* m³ (bbl) | 0.09 (0.542) | 0.09 (0.542) | 0.09 (0.542) | --- |
| EX-MUL® NT* kg (lb) | 4 (9.0) | 4 (9.0) | 4 (9.0) | 4 (9.0) |
| lime kg (lb) | 2.3 (5.0) | 2.3 (5.0) | 2.3 (5.0) | 3.2 (7.0) |
| DURATONE® HT* kg (lb) | 4 (9.0) | 4 (9.0) | 4 (9.0) | 4 (9.0) |
| water m³ (bbl) | 0.03 (0.18) | 0.03 (0.18) | 0.03 (0.18) | 0.03 (0.18) |
| CaCl₂ kg (lb) | 7 (15.6) | 7 (15.6) | 7 (15.6) | 7 (15.6) |
| Barite kg (lb) | 132 (292.0) | 132 (292.0) | 132 (292.0) | 132 (292.0) |

| | | | | |
|---|---|---|---|---|
| * GELTONE® II (an organophilic clay viscosifier, available from Halliburton Energy Services, Inc.); CLAIRSOL® NS (a very low toxicity base-oil, available from Petrochem Carless Limited); EDC 95-11 (a biodegradable base-oil, available from Total Fluids); EX-MUL® NT (an invert emulsifier, available from Halliburton Energy Services, Inc.); DURATONE® HT (a modified lignitic, available from Halliburton Energy Services, Inc.) | | | | |

The rheology of the drilling fluid samples were tested at three time points (1) initially after making the drilling fluid, (2) after hot rolling ("HR") the drilling fluid at 66°C (150°F) for 16 hours, and (3) after hot rolling the drilling fluid at 121°C (250°F) for 16 hours. The rheological testing methods utilized were API RP 13B-2 and API RP 131 at 49°C (120°F).

**Table 2**

| | plastic viscosity (cP) | yield point kg/m² (lb/100 ft²) | 600 rpm | 300 rpm | 200 rpm | 100 rpm | 6 rpm | 3 rpm |
|---|---|---|---|---|---|---|---|---|
| Sample 1 | | | | | | | | |
| initial | 50 | 0.93 (19) | 119.0 | 69.0 | 51.5 | 32.5 | 9.5 | 7.5 |
| HR 16 hr at 66°C (150°F) | 48 | 1.07 (22) | 118.0 | 70.0 | 52.0 | 33.5 | 9.5 | 7.5 |
| HR 16 hr at 121°C (250°F) | 43 | 0.93 (19) | 105.0 | 62.0 | 47.0 | 31.0 | 9.0 | 7.5 |

| Sample 2 | | | | | | | | |
|---|---|---|---|---|---|---|---|---|
| initial | 51.5 | 1.12 (23) | 126.0 | 74.5 | 56.5 | 37.0 | 11.0 | 9.5 |
| HR 16 hr at 66°C (150°F) | 49.5 | 1.05 (21.5) | 120.5 | 71.0 | 55.0 | 37.0 | 12.0 | 10.5 |
| HR 16 hr at 121°C (250°F) | 49 | 1.56 (32) | 130.0 | 81.0 | 62.5 | 42.5 | 14.5 | 12.0 |

| Sample 3 | | | | | | | | |
|---|---|---|---|---|---|---|---|---|
| Initial | 42 | 0.73 (15) | 99 | 57 | 41 | 26 | 7 | 6 |
| HR 16 hr at 66°C (150°F) | 46 | 0.78 (16) | 108 | 62 | 47 | 30 | 8 | 7 |
| HR 16 hr at 121°C (250°F) | 44 | 1.07 (22) | 110 | 66 | 50 | 32 | 10 | 8 |

| GELTONE® II | | | | | | | | |
|---|---|---|---|---|---|---|---|---|
| Initial | 29 | 0.73 (15) | 73 | 44 | 34 | 23 | 19 | 14 |
| HR 16 hr at 121°C (250°F) | 29 | 0.83 (17) | 75 | 46 | 36 | 20 | 15 | 10 |

This example demonstrates, *inter alia,* the ability to tailor the rheological properties of drilling fluids by tailoring the composition of the organophilic clays of the present invention (*i.e.,* clay having been treated with surfactant systems of the present invention). Advantageously, the desired rheological properties of the drilling fluids can be achieved or exceeded utilizing less expensive organophilic clays (*e.g.,* Sample 2 as compared to IDP-572) while utilizing a surfactant system comprising biodegradable quaternary ammonium surfactants.

While compositions and methods are described in terms of "comprising," "containing," or "including" various components or steps, the compositions and methods can also "consist essentially of" or "consist of" the various components and steps. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

## Claims

1. A drilling fluid comprising:
an oil-based fluid; and
an organophilic clay treated with a surfactant system comprising a biodegradable quaternary ammonium surfactant and a nonbiodegradable quaternary ammonium surfactant;
wherein the biodegradable quaternary ammonium surfactant is a propalkonium-based amide, and the biodegradable quaternary ammonium surfactant is capable of degrading by more than 90% over 28 days, as determined by Method 306 of the OECD Guidelines for the Testing of Chemicals; and
wherein the nonbiodegradable quaternary ammonium surfactant is a dialkyl dihydrogenated tallow ammonium surfactant.

2. A drilling fluid according to Claim 1, wherein the clay is selected from a member of the smectite family, a member of the illite family, a member of the palygorskite-sepiolite phyllosilicate family, bentonite, hectorite, attapulgite, smectite, vermiculite, swellable fluoromica, montmorillonite, beidellite, saponite, sepiolite, any cation exchanged version thereof, and any combination thereof.

3. A drilling fluid according to Claim 1 or Claim 2, wherein the weight ratio of the biodegradable quaternary ammonium surfactant to the nonbiodegradable quaternary ammonium surfactant is in the range of 1:10 to 10:1.

4. A drilling fluid according to any preceding claim, wherein the weight ratio of the clay to the surfactant system is in the range of 1:1 to 5:1.

5. A drilling fluid according to any preceding claim, wherein the oil-based fluid is an invert emulsion.

6. A method comprising drilling at least a portion of a wellbore penetrating a subterranean formation using a drilling fluid as defined in any preceding claim.

## Patentansprüche

1. Bohrflüssigkeit, umfassend:
eine ölbasierte Flüssigkeit; und
eine organophile Tonerde, die mit einem Tensidsystem behandelt ist, umfassend ein biologisch abbaubares quartäres Ammoniumtensid und ein biologisch nicht abbaubares quartäres Ammoniumtensid;
wobei das biologisch abbaubare quartäre Ammoniumtensid ein Amid auf Propalkoniumbasis ist und das biologisch abbaubare quartäre Ammoniumtensid in der Lage ist, über 28 Tage um mehr als 90 % abgebaut zu werden, wie durch Verfahren 306 der EOCD-Richtlinien zur Prüfung von Chemikalien bestimmt; und
wobei das biologisch nicht abbaubare quartäre Ammoniumtensid ein Dialkyl-Dihydrat-Talk-Ammonium-Tensid ist.

2. Bohrflüssigkeit nach Anspruch 1, wobei die Tonerde aus einem Element der Smektit-Familie, einem Element der Illit-Familie, einem Element der Palygorskit-Sepiolith-Phyllosilikat-Familie, Bentonit, Hectorit, Attapulgit, Smektit, Vermiculit, quellbares Fluormuskovit, Montmorillonit, Beidellite, Saponit, Sepiolith, einer beliebigen Kationenaustauschversion davon oder einer beliebigen Kombination davon ausgewählt ist.

3. Bohrflüssigkeit nach Anspruch 1 oder Anspruch 2, wobei das Gewichtsverhältnis des biologisch abbaubaren quartären Ammoniumtensid zu dem biologisch nicht abbaubaren quartären Ammoniumtensid im Bereich von 1:10 bis 10:1 liegt.

4. Bohrflüssigkeit nach einem der vorstehenden Ansprüche, wobei das Gewichtsverhältnis der Tonerde zu dem Tensidsystem im Bereich von 1:1 bis 5:1 liegt.

5. Bohrflüssigkeit nach einem der vorstehenden Ansprüche, wobei die ölbasierte Flüssigkeit eine Invertemulsion ist.

6. Verfahren, umfassend Bohren mindestens eines Abschnitts eines Bohrlochs, das eine unterirdische Formation durchdringt, unter Verwendung einer Bohrflüssigkeit wie in einem der vorstehenden Ansprüche definiert.

## Revendications

1. Fluide de forage comprenant :
un fluide à base d'huile ; et
une argile organophile traitée avec un système tensioactif comprenant un tensioactif d'ammonium quaternaire biodégradable et un tensioactif d'ammonium quaternaire non biodégradable ;
dans lequel le tensioactif d'ammonium quaternaire biodégradable est un amide à base de propalkonium, et le tensioactif d'ammonium quaternaire biodégradable est capable de se dégrader de plus de 90 % en l'espace de 28 jours, tel que déterminé par la méthode 306 des lignes directrices de l'OCDE pour le test de produit chimique ; et
dans lequel le tensioactif d'ammonium quaternaire non biodégradable est un tensioactif d'ammonium de suif dihydrogéné de dialkyle.

2. Fluide de forage selon la revendication 1, dans lequel l'argile est choisie parmi un élément de la famille des smectites, un élément de la famille des illites, un élément de la famille des phyllosilicates palygorskite-sépiolite, la bentonite, l'hectorite, l'attapulgite, la smectite, la vermiculite, le fluoromica dilatable, la montmorillonite, la beidellite, la saponite, la sépiolite, toute version d'échange de cations de ceux-ci, et toute combinaison de ceux-ci.

3. Fluide de forage selon la revendication 1 ou la revendication 2, dans lequel le rapport en poids du tensioactif d'ammonium quaternaire biodégradable au tensioactif d'ammonium quaternaire non biodégradable est compris dans la plage allant de 1:10 à 10:1.

4. Fluide de forage selon une quelconque revendication précédente, dans lequel le rapport en poids de l'argile au système tensioactif est compris dans la plage allant de 1:1 à 5:1.

5. Fluide de forage selon une quelconque revendication précédente, dans lequel le fluide à base d'huile est une émulsion inversée.

6. Procédé comprenant le forage d'au moins une partie d'un puits de forage pénétrant une formation souterraine en utilisant un fluide de forage selon une quelconque revendication précédente.
